(19) Europäisches Patentamt
European Patent Office
Office européen des brevets

(11) Publication number: **0 050 873**
**B1**

# (12) EUROPEAN PATENT SPECIFICATION

(45) Date of publication of patent specification: **05.10.83**

(51) Int. Cl.³: **C 09 D 11/02**

(21) Application number: **81108942.4**

(22) Date of filing: **26.10.81**

## (54) An ink composition for use in dry planographic printing.

(30) Priority: **29.10.80 JP 150834/80**

(43) Date of publication of application:
**05.05.82 Bulletin 82/18**

(45) Publication of the grant of the patent:
**05.10.83 Bulletin 83/40**

(84) Designated Contracting States:
**CH DE FR GB IT LI**

(56) References cited:
**US - A - 2 732 799**
**US - A - 3 682 688**

(73) Proprietor: **TORAY INDUSTRIES, INC.**
**2, Nihonbashi-Muromachi 2-chome Chuo-ku**
**Tokyo 103 (JP)**

(72) Inventor: **Ikeda, Norimasa**
**11-11,2 chome Nogohara**
**Ohtsu Shiga (JP)**
Inventor: **Ogawa, Yuzo**
**14-32, 4 chome Nango**
**Ohtsu Shiga (JP)**
Inventor: **Mori, Yoichi**
**10-24, 2 chome Oohira**
**Ohtsu Shiga (JP)**

(74) Representative: **Kador . Klunker . Schmitt-Nilson . Hirsch**
**Corneliusstrasse 15**
**D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 050 873 B1**

Courier Press, Leamington Spa, England

# An ink composition for use in dry planographic printing

The present invention relates to an ink composition for dry planographic printing having superior anti-toning and fluidity properties.

For the planographic printing which is currently in use in the printing industry, a printing plate having a hydrophilic non-image area and an oleophilic image area is employed, whereby the fact that water and oil-based printing ink repel each other is exploited in such a way that after water has been applied to the hydrophilic non-image area, the oil-based ink is applied only to the oleophilic image area and then transferred onto the material that is to be printed.

However, in this conventional planographic printing process it is difficult to control the behavior of the fountain solution which prevents the adhesion of the ink to the non-image area, so that the employment of a fountain solution is a considerable obstacle as far as printability and printing performance are concerned. Accordingly, various suggestions for dry planographic printing processes not requiring a fountain solution have been made. The most recent and practicable of these suggestions involves the use of a planographic printing plate having a thin ink-repellent layer of silicone rubber or something similar on the non-image area. It has been reported that in this case the conventional oil-based printing ink can be used effectively without applying a fountain solution to the surface of the printing plate.

However, it has been found in actual practice that the use of conventional oil-based printing ink involves undesirable toning in the non-image area. This is attributable to the fact that the cohesive energy of the ink is reduced due to the temperature increase on the surface of the printing plate as a result of the friction of the driving parts or rollers of the printing press during printing, so that the ink adheres to the non-image area which should normally be ink-repellent.

To overcome these problems a method of increasing the cohesive energy by employing a resin of high molecular weight may, for example, be considered, but this method involves such difficulties as piling on the blanket, picking, etc. Another possible method involves a process in which aluminum compounds such as aluminum stearate, aluminum octoate, etc., are added to the varnish for gelation. But if a high anti-toning property is to be obtained by this method, the viscosity of the ink is increased considerably and the flow and distribution of the ink on the printing press or the transfer onto the printing plate or the blanket is extremely impaired. Thus this method, too, is far from satisfactory at present.

After investigating ink compositions suitable for dry planographic printing, the present inventors have discovered that an ink composition gelated with organotitanate yields favorable results, and they arrived at the invention described in detail hereinbelow.

The present invention relates more specifically to an improved ink composition for use in dry planographic printing, characterized in that at least one of the organotitanates represented by the following general formulae (1) and (2) is employed as a gelating agent.

(1) $$(R^1O)_m Ti\,[O—X—(R^2—Y)_p]_n$$

whereby

$R^1$ is an alkyl group, aryl group, aralkyl group, alkenyl group or alkanoyl group,

X is 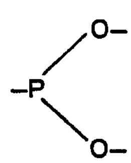 , 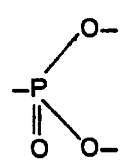 , 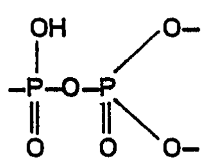 , 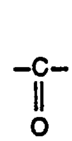 or 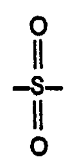 ,

$R^2$ is an alkylene group or arylene group,

Y is —$NH_2$, —SH, —OH, —CH=$CH_2$,

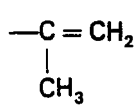

or —H,

m and n are integers of 0 to 4, with $m + n = 4$, and

p is 1 or 2;

(2) $$(R^3O)_4Ti[P(OR^4)_2OH]_2$$

whereby

$R^3$ is an alkyl group, aryl group, aralkyl group, alkenyl group or alkanoyl group, and

$R^4$ is an alkyl group or aryl group.

The organotitanate compounds represented by these two formulae may be tetraisopropyl bis (dioctylphosphito) titanate, di(dioctylpyrophosphato)ethylene titanate, isopropyl triisostearoyl titanate, isopropyl tridodecylbenzenesulfonyl titanate, tetrabutyl titanate, etc.

The above organotitanates used as a gelating agent for the present invention are effective not only singly but also when two or more are mixed, and they may also be used effectively simultaneously with aluminum compounds such as conventionally employed. Although the content of organotitanate in the ink depends on what components the ink is constituted of, it should be in the range of 0.1 to 10% by weight, and preferably 0.5 to 5% by weight relative to the weight of the varnish. The varnish as formulated above exhibits relatively low viscosity, and the ink produced from such varnish is markedly superior in fluidity, and its anti-toning property, so that it displays sufficient performance in printing.

The component constituting the varnish may be a known material such as a drying oil, rosin, rosin ester, phenolic resin, rosin-modified phenolic resin, alkyd resin, epoxy resin, aminoalkyd resin, etc. or a urethane-modified vegetable oil, urethane-modified alkyd resin, etc., but particularly a composition mainly consisting of a rosin-modified phenolic resin, rosin-modified phenolic resin and urethane-modified vegetable oil, and rosin-modified phenolic resin and urethane-modified alkyd resin. The coloring material may be any one used in conventional ink compositions, such as organic or inorganic pigments, etc.

Other known materials such as wax, grease, dryers, dispersing agents, fillers and the like may also be added.

The gelation reaction using organotitanate may be carried out in the range between room temperature and 250°C, and attained by the addition of the predetermined amount of organotitanate to the varnish while stirring. The reaction time of 10 to 30 minutes may be sufficient for the purpose. The varnish thus obtained has relatively low viscosity so that it yields a soft ink having superior fluidity and transfer properties, and also a high critical toning temperature. The resultant printed matter thus has superior gloss and is of extremely high quality.

Hereinbelow examples are given to illustrate the present invention, without however limiting the scope thereof. Note that the parts employed in the examples are based on parts by weight.

Example 1 and Control 1

Ink A was prepared from the varnish gelated with tetraisopropyl bis (dioctylphosphito) titanate, and ink B was prepared from the varnish gelated with aluminum octoate. When the critical toning temperatures, an index for anti-toning, were measured, both ink A and ink B exhibited 40°C. The results of fluidity measurement for these inks, taken by a spread meter, are shown as follows:

| | Flow Value (mm) | IC (mm) (Intercept) |
|---|---|---|
| Ink A | 36.2 | 21.3 |
| Ink B | 33.1 | 20.7 |

Ink A prepared from the varnish gelated with tetraisopropyl bis (dioctylphosphito) titanate had better fluidity and feel when handled by an ink pellet.

Printing was carried out with these inks by the Komori's Sprint, offset press, using a dry planographic printing plate having an ink-repellent layer composed of silicone rubber in the non-image area, without the use of a fountain solution applied to the plate surface.

As a result it was found that ink A was superior in its quick response to the change of ink feeding from an ink duct, and yielded printed matter of higher quality and better gloss.

Ink A: ink prepared from the varnish gelated with organotitanate

| | |
|---|---|
| Benzidine yellow G | 15.0 parts |
| Rosin-modified phenolic resin varnish (I) | 16.5 parts |
| Rosin-modified phenolic resin gel varnish (II) | 65.0 parts |
| Cobalt naphthenate (Metal concentration 6.0%) | 0.5 part |
| Solvent No. 5 (Nippon Oil Co.) | 3.0 parts |
| Total | 100 parts |

When the mixture of the above was milled on a triple roll mill, an ink for dry planographic printing having the ink-o-meter tack value of 12.6 (value after 1 min at 400 rpm and 30°C) was obtained.

Formulation of rosin-modified phenolic resin varnish (I)

| | |
|---|---|
| Rosin-modified phenolic resin | 33.0 parts |
| Bodied linseed oil | 33.0 parts |
| Solvent No. 5 (Nippon Oil Co.) | 34.0 parts |
| Total | 100 parts |

Formulation of rosin-modified phenolic resin gel varnish (II)

| | |
|---|---|
| Rosin-modified alkylphenolic resin | 38.0 parts |
| Bodied linseed oil | 23.2 parts |
| Tetraisopropyl bis (dioctylphosphito) titanate | 0.8 part |
| Solvent No. 5 (Nippon Oil Co.) | 38.0 parts |
| Total | 100 parts |

Ink B: ink prepared from the varnish gelated with aluminum octoate

| | |
|---|---|
| Benzidine yellow G | 15.0 parts |
| Rosin-modified phenolic resin varnish (I) | 16.5 parts |
| Rosin-modified phenolic resin gel varnish (III) | 65.0 parts |
| Cobalt naphthenate (Metal concentration 6.0%) | 0.5 part |
| Solvent No. 5 (Nippon Oil Co.) | 3.0 parts |
| Total | 100 parts |

Formulation of rosin-modified phenolic resin gel varnish (III)

| | |
|---|---|
| Rosin-modified alkylphenolic resin | 38.0 parts |
| Bodied linseed oil | 23.4 parts |
| Aluminum octoate | 0.6 part |
| Solvent No. 5 (Nippon Oil Co.) | 38.0 parts |
| Total | 100 parts |

After milling the above mixture in a triple roll mill, an ink having the ink-o-meter tack value of 12.1 was obtained.

The evaluation method of the anti-toning property (measurement of critical toning temperature): A dry planographic printing plate having an ink-repellent layer of silicone rubber was mounted on a printing press modified so as to be capable of raising the temperature on the plate surface by circulating hot water through the plate cylinder, and printing was carried out while raising the temperature of the plate surface without the application of a fountain solution. Thus the temperature of the plate surface was recorded as the critical toning temperature when toning became noticeable on the printed matter at the standard solid density. When ink having a higher critical toning temperature was used, toning did not take place readily in the actual printing process.

Example 2 and Control 2

Ink C was prepared from the varnish gelated with di(dioctylpyrophosphato) ethylene titanate, and ink D was prepared from the varnish gelated with aluminum distearate. It was found, as shown in the table below, that although the critical toning temperatures and ink-o-meter tack values were approximately the same, ink C was greatly superior in regard to fluidity.

| | Critical toning temperature (°C) | Tack value | Flow value (mm) | I.C. (intercept) (mm) |
|---|---|---|---|---|
| Ink C | 38 | 10.8 | 36.6 | 23.4 |
| Ink D | 39 | 12.0 | 31.0 | 19.4 |

Printing was carried out with these inks by the Komori's Sprint, offset press, using the dry planographic printing plate having an ink-repellent layer composed of silicone rubber in the non-image area, without the application of a fountain solution to the plate surface. As a result it was found that ink C was superior in regard to stability on the press and printed matter of higher quality and better gloss was obtained.

Ink C:

| | |
|---|---|
| Carmine 6B | 20.0 parts |
| Rosin-modified phenolic resin varnish (I) | 25.0 parts |
| Rosin-modified phenolic resin gel varnish (IV) | 50.9 parts |
| Paste dryer | 0.1 part |
| Solvent No. 5 (Nippon Oil Co.) | 4.0 parts |
| Total | 100 parts |

The above mixture was milled into ink on the triple roll mill.

Formulation of rosin-modified phenolic resin gel varnish (IV)

| | |
|---|---|
| Rosin-modified alkylphenolic resin | 33.0 parts |
| Bodied linseed oil | 10.0 parts |
| Long oil linseed-modified alkyd resin | 22.3 parts |
| Solvent No. 5 (Nippon Oil Co.) | 34.0 parts |
| Di(dioctylpyrophosphato) ethylene titanate | 0.7 part |
| Total | 100 parts |

Ink D:

| | |
|---|---|
| Carmine 6B | 20.0 parts |
| Rosin-modified phenolic resin varnish (I) | 25.0 parts |
| Rosin-modified phenolic resin gel varnish (V) | 50.9 parts |
| Paste dryer | 30.1 parts |
| Solvent No. 5 (Nippon Oil Co.) | 34.0 parts |
| Total | 100 parts |

Formulation of rosin-modified gel varnish (V)

| | |
|---|---|
| Rosin-modified alkylphenolic resin | 33.0 parts |
| Bodied linseed oil | 10.0 parts |
| Long oil linseed-modified alkyd resin | 22.0 parts |
| Solvent No. 5 (Nippon Oil Co.) | 34.0 parts |
| Aluminum distearate | 1.0 part |
| Total | 100 parts |

Example 3 and Control 3

Ink E was prepared from the varnish gelated with tetroctyl di(ditridecylphosphito) titanate, and ink F was prepared from the varnish gelated with aluminum isopropoxide. It was found, as shown in the table below, that although the critical toning temperature was the same, in k E was greatly superior in regard to fluidity.

| | Critical toning temperature (°C) | Tack value (30°C 400 rpm) | Flow value (mm) (30°C) | I.C. (mm) |
|---|---|---|---|---|
| Ink E | 40 | 9.7 | 38.3 | 24.1 |
| Ink F | 40 | 10.8 | 33.2 | 20.5 |

Printing was carried out with these inks as in Example 2. As a result it was found that ink E was superior in regard to its transfer property, consistency in the printed color and ink lay and gloss of the printed matter, compared to ink F.

Ink E:

| | |
|---|---|
| Carbon black | 20.0 parts |
| Alkali blue toner | 6.0 parts |
| Rosin-modified phenolic resin varnish (I) | 20.0 parts |
| Rosin-modified phenolic gel varnish (VI) | 47.0 parts |
| Carnauba wax | 2.0 parts |
| Paste dryer | 1.0 part |
| Solvent No. 5 (Nippon Oil Co.) | 4.0 parts |
| Total | 100 parts |

The above mixture was milled into ink on the triple roll mill.

Formulation of rosin-modified phenolic resin gel varnish (VI)

| | |
|---|---|
| Rosin-modified alkylphenolic resin | 32.0 parts |
| Bodied linseed oil (No. 4) | 16.0 parts |
| Urethane-modified vegetable oil | 12.0 parts |
| Solvent No. 5 (Nippon Oil Co.) | 39.0 parts |
| Tetraoctyl di(ditridecylphosphito) titanate | 11.0 parts |
| Total | 100 parts |

Ink F:

| | |
|---|---|
| Carbon black | 20.0 parts |
| Alkali blue toner | 6.0 parts |
| Rosin-modified phenolic resin varnish (I) | 20.0 parts |
| Rosin-modified phenolic resin gel varnish (VII) | 47.0 parts |
| Carnauba wax | 2.0 parts |
| Paste dryer | 1.0 part |
| Solvent No. 5 (Nippon Oil Co.) | 4.0 parts |
| Total | 100 parts |

Formulation of rosin-modified phenolic resin gel varnish (VII)

| | |
|---|---|
| Rosin-modified alkylphenolic resin | 32.0 parts |
| Bodied linseed oil (No. 4) | 16.0 parts |
| Urethane-modified vegetable oil | 12.5 parts |
| Solvent No. 5 (Nippon Oil Co.) | 39.0 parts |
| Aluminum isopropoxide | 0.5 part |
| Total | 100 parts |

**Claims**

1. An ink composition for use in dry planographic printing, characterized in that it contains at least one of the organotitanates represented by the following general formulae (1) and (2):

(1) $$(R^1O\text{-})_m Ti \text{-}[O—X\text{-}(R^2—Y)_p]_n$$

whereby

$R^1$ is an alkyl group, aryl group, aralkyl group, alkenyl group or alkanoyl group,

X is 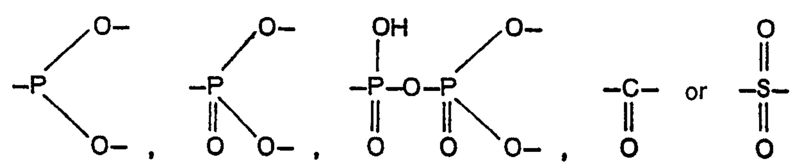 , , , or ,

$R^2$ is an alkylene group or arylene group,

Y is $—NH_2$, $—SH$, $—OH$, $—CH{=}CH_2$,

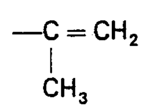

or $—H$,

m and n are integers of 0 to 4, with $m + n = 4$, and

p is 1 or 2;

(2) $$(R^3O)_4Ti[P\text{-}(OR^4)_2OH]_2$$

whereby

$R^3$ is an alkyl group, aryl group, aralkyl group, alkenyl group or alkanoyl group, and

$R^4$ is an alkyl group or aryl group.

2. An ink composition as in claim 1, characterized in that the amount of organotitanate or organotitanates is 0.1 to 10% by weight based on the varnish constituting the ink composition.

3. An ink composition as in claim 2, characterized in that the amount of organotitanate or organotitanates is 0.5 to 5% by weight.

4. An ink composition as in any of the above claims, characterized in that the organotitanate is selected from a group consisting of tetraisopropyl bis (dioctylphosphito) titanate, di (dioctylpyrophosphato) ethylene titanate, isopropyl triisostearoyl titanate tetraoctyl di (ditridecylphosphito) titanate, tetra butyltitanate and isopropyl tridodecylbenzenesulfonyl titanate.

**Revendications**

1. Composition d'encre pour l'utilisation dans l'impression planographique sèche, caractérisée en ce qu'elle contient au moins un des organotitanates représentés par les formules générales suivantes (1) et (2):

(1) $$(R^1O)_m Ti [O—X—(R^2—Y)_p]_n$$

où

R¹ est un groupe alkyle, un groupe aryle, un groupe aralkyle, un groupe alkényle ou un groupe alcanoyle

X est 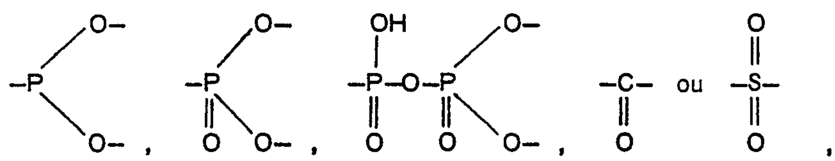 , , , ou ,

$R^2$ est un groupe alkylène ou un groupe arylène,
Y est $—NH_2$, $—SH$, $—OH$, $—CH{=}CH_2$,

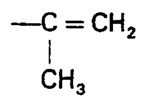

ou —H,
m et n sont des nombres entiers valant 0 à 4, m + n étant égal à 4, et
p vaut 1 ou 2;

(2) $$(R^3O)_4Ti[P(OR^4)_2OH]_2$$

où

$R^3$ est un groupe alkyle, un groupe aryle, un groupe aralkyle, un groupe alkényle ou un groupe alcanoyle, et
$R^4$ est un groupe alkyle ou un groupe aryle.

2. Composition d'encre selon la revendication 1, caractérisée en ce que la quantité d'organotitanate ou d'organotitanates est 0,1 à 10% en poids, en se basant sur le vernis constituant la composition d'encre.

3. Composition d'encre selon la revendication 2, caractérisée en ce que les quantité d'organotitanate ou d'organotitanates est 0,5 à 5% en poids.

4. Composition d'encre selon l'une quelconque des revendications précédentes, caractérisée en ce que l'organotitanate est choisi dans un groupe se composant de bis(dioctylphosphito)titanate de tétraisopropyle, de titanate de di(dioctylpyrophosphato)éthylène, de triisostéaroyltitanate d'isopropyle, de di(ditridécylphosphito)titanate de tétraoctyle, de titanate de tétrabutyle et de tridodécylbenzènesulfonyltitanate d'isopropyle.

**Patentansprüche**

1. Druckfarben-Zusammensetzung für das trockene Flachdruckverfahren, dadurch gekennzeichnet, daß sie wenigstens eines der Organotitanate der nachfolgenden allgemeinen Formeln (1) und (2) enthält:

(1) $$(R^1O)_m Ti [O—X—(R^2—Y)_p]_n$$

in der

$R^1$ eine Alkylgruppe, Arylgruppe, Aralkylgruppe, Alkenylgruppe oder Alkanoylgruppe ist;

X 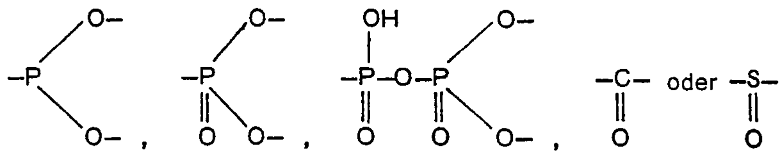 , , , oder ist,

$R^2$ eine Alkylengruppe oder Arylengruppe ist;
Y $—NH_2$, —SH, —OH, $—CH{=}CH_2$,

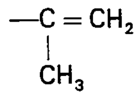

oder —H ist;
m und n ganze Zahlen von 0 bis 4 sind, wobei gilt:
$m + n = 4$; und
p 1 oder 2 ist;

(2) $$(R^3O)_4Ti[P{-}(OR^4)_2OH]_2$$

in der
$R^3$ eine Alkylgruppe, Arylgruppe, Aralkylgruppe, Alkenylgruppe oder Alkanoylgruppe ist; und
$R^4$ eine Alkylgruppe oder Arylgruppe ist.

2. Druckfarben-Zusammensetzung nach Anspruch 1, dadurch gekennzeichnet, daß die Menge des Organotitanats oder der Organotitanate 0,1 bis 10 Gew.-%, bezogen auf den Lack, der die Druckfarben-Zusammensetzung bildet, beträgt.

3. Druckfarben-Zusammensetzung nach Anspruch 2, dadurch gekennzeichnet, daß die Menge des Organotitanats oder der Organotitanate 0,5 bis 5 Gew.-% beträgt.

4. Druckfarben-Zusammensetzung nach einem beliebigen der obigen Ansprüche, dadurch gekennzeichnet, daß das Organotitanat aus einer Gruppe ausgewählt ist, die aus Tetraisopropyl-bis (dioctylphosphito) titanat, Di(dioctylpyrophosphato)ethylentitanat, Isopropyl-triisostearoyl-titanat, Tetraoctyl-di(ditridecylphosphito)titanat, Tetrabutyltitanat und Isopropyltridodecylbenzolsulfonyl-titanat besteht.